# FASCICULE DE BREVET EUROPEEN

(11) **EP 4 616 693 B1**
(45) Date de publication et mention de la délivrance du brevet: **09.12.2026**
(21) Numéro de dépôt: 25161334.5
(22) Date de dépôt: 03.03.2025
(51) Int. Cl.: A01C 7/04

(54) **ENSEMBLE DE DISTRIBUTION POUR UN SEMOIR ET PROCÉDÉ D'ISOLATION ASSOCIÉ**
VEREINZELUNGSEINHEIT FÜR EINE SÄMASCHINE UND ZUGEHÖRIGES ISOLIERUNGSVERFAHREN
METERING UNIT FOR A SEED DRILL AND ASSOCIATED ISOLATION METHOD

(30) Priorité: 15.03.2024 FR 2402630
(43) Date de publication de la demande: 17.09.2025
(73) Titulaire: Kuhn SAS, 67700 Saverne (FR)
(72) Inventeur: CONSTANT, Olivier, 67340 WEITERSWILLER (FR)

(56) Documents cités:
- EP-B1- 0 050 829
- EP-B1- 3 357 319
- FR-A1- 2 323 308
- US-A- 4 613 056
- US-A1- 2010 282 147

## Description

La présente invention concerne le domaine des ensembles de distribution pour un semoir.

L'invention concerne ainsi plus généralement le domaine du semis monograine qui est aussi appelé semis de précision, c'est-à-dire le semis en rangs de graines une par une. Le semis monograine trouve son application dans les cultures du maïs, de la betterave, du soja ou similaire.

Un semoir monograine se présente généralement sous la forme d'un châssis-poutre sur lequel viennent se fixer des éléments semeurs qui le plus souvent sont compris entre 4 et 12, voire plus, grâce à un parallélogramme. L'espacement entre ces éléments semeurs varie selon les cultures, de préférence entre 37,5 centimètres et 80 centimètres, mais permet de former des rangs bien distincts. Pour cette raison, il est commun dans ce cas de parler de cultures en rangs, par opposition aux cultures comme le blé où l'espacement est beaucoup plus faible.

De manière connue, un ensemble de distribution de semoir monograine fonctionne globalement de la manière énoncée ci-après.

Un boîtier étanche en deux parties comporte un disque de distribution perforé entrainé en rotation de préférence par un moteur qui forme un organe de distribution d'une pluralité d'éléments granulaires. Le disque de distribution sépare le boîtier en deux chambres dans lesquelles les pressions d'air sont différentes, une différence de pression qui peut être positive ou négative est donc créée de part et d'autre du disque de distribution perforé. Le boîtier est relié à une soufflerie qui permet de gérer la différence de pression selon le type de graine, la vitesse d'avance, et d'autres paramètres.

En bas du disque de distribution perforé, c'est-à-dire au fond du boîtier se trouve une zone de réserve d'éléments granulaires, par exemple des graines, qui est le plus souvent approvisionnée par une trémie. Ces graines sont en contact avec le disque de distribution perforé en rotation, qui, au fur et à mesure de sa rotation, va entrainer les graines une par une dans ses perforations.

Le diamètre et la forme des perforations du disque de distribution sont faits de manière à pouvoir accueillir un seul élément granulaire par exemple une graine, le maintien de l'élément granulaire dans la perforation se fait grâce à la différence de pression entre les deux côtés du disque de distribution. Les perforations sont souvent bordées de formes spéciales qui sont par exemple en relief et/ou en creux et sont aménagées dans le disque de distribution de sorte à guider et/ou orienter les graines vers la perforation. Ces zones autour des perforations sont appelées communément agitateurs.

Une fois les graines distribuées dans les perforations du disque de distribution, un système dit de sélection permet d'éliminer les graines qui sont en trop pour éviter les doubles, car il peut arriver que plusieurs graines viennent se loger dans une seule perforation ce qui n'est pas souhaitable. La sélection peut se faire grâce à des dents, des brosses, ou similaires qui sont montées fixes et sont situées à l'extérieur et/ou à l'intérieur du parcours des graines. Il en résulte que les graines excédentaires retombent dans la zone de réserve.

Une fois les graines sélectionnées, elles sont transportées vers la dernière zone de la distribution qui est généralement située dans le dernier quart de tour du disque de distribution, où la différence de pression n'est plus présente. Il résulte de cette absence de différence de pression que la graine sort de la perforation et sort de la distribution vers le sol. L'éjection de la graine peut être assistée par une roulette qui permet de couper la différence de pression et éventuellement de pousser la graine en dehors de la perforation à l'aide de picots. Un tel ensemble de distribution avec un dispositif de verrouillage est connu de EP 3 357 319 B1.

Dans certaines situations, la porte mobile du boîtier étanche doit être ouverte par exemple pour changer le disque de distribution et/ou pour réaliser une opération de nettoyage et/ou de maintenance et/ou une vidange des graines et/ou des réglages.

Dans ces cas-là, il est souhaitable d'être en mesure d'isoler le boîtier de la trémie contenant les graines afin d'arrêter leur arrivée dans le boîtier.

Pour ce faire, l'arrivée de graines dans le boîtier est réalisée sous forme d'une conduite sélectivement ouverte ou non par un obturateur. Cet obturateur peut également s'ouvrir partiellement pour jouer sur le flux d'arrivée de graines dans le boîtier.

Lorsqu'il est souhaitable d'isoler le boîtier de la trémie, cette arrivée doit être complètement bloquée par la fermeture de l'obturateur. L'obturateur est déplacé entre ses différentes positions par un levier actionné à la main par l'opérateur. Le levier est monté sur l'extérieur du boîtier de distribution. Un affichage sur le boîtier indique la position du levier.

Jusqu'à présent, l'opérateur devait s'assurer qu'il avait bien fermé l'arrivée de graines avant d'ouvrir la porte du boîtier. Faute de quoi, les graines continueront à s'écouler dans le boîtier et tomberont au sol au moment où l'opérateur démontera le disque de distribution. Or, il n'est pas rare que la fermeture de l'arrivée de graines soit oubliée par l'opérateur, les graines tombent alors parfois au sol par accident.

La présente invention a pour but de pallier au moins l'un de ces inconvénients et vise à fournir une solution permettant d'isoler automatiquement le boîtier de la trémie dans certaines conditions.

A cet effet, l'invention concerne un ensemble de distribution pour un semoir comprenant au moins :
- un boîtier étanche comprenant au moins une partie fixe et une porte mobile entre une position d'ouverture et une position de fermeture,
- un organe de distribution d'une pluralité d'éléments granulaires agencé pour distribuer de façon discrète et singulière une pluralité d'éléments granulaires,

l'organe de distribution étant disposé à l'intérieur du boîtier pour séparer l'intérieur du boîtier en une première chambre et une deuxième chambre, lesquelles sont distinctes, la première chambre étant configurée pour recevoir tout ou partie de la pluralité d'éléments granulaires au moins dans une zone de réserve et la deuxième chambre étant fermée par la porte au moins dans sa position de fermeture,
la partie fixe du boîtier comprend en outre une arrivée d'éléments granulaires débouchant dans la première chambre associée à un obturateur, ladite arrivée 8 d'éléments granulaires étant configurée pour être reliée à des moyens de conduction reliés à une trémie,
l'obturateur étant actionnable par un organe de sélection pour au moins sélectivement disposer l'obturateur dans une position obturée de l'arrivée d'éléments granulaires dans laquelle l'obturateur obture l'arrivée d'éléments granulaires ou dans une position d'accès de l'arrivée d'éléments granulaires dans laquelle l'obturateur n'obture pas en tout ou partie l'arrivée d'éléments granulaires,
dans la position de fermeture la porte est au moins verrouillée dans un état verrouillé ou déverrouillée dans un état déverrouillé au moins par un dispositif de verrouillage,
   et
dans la position de fermeture de la porte le dispositif de verrouillage et l'organe de sélection sont configurés pour que :
   - tant que l'obturateur est dans la position d'accès ou n'est pas dans la position obturée, la porte est maintenue dans l'état verrouillé par le dispositif de verrouillage et l'ensemble de distribution est caractérisé en ce que:
      - l'actionnement de l'organe de sélection pour faire passer l'obturateur de la position d'accès vers la position obturée entraîne l'actionnement du dispositif de verrouillage de sorte à autoriser le passage de la porte vers l'état déverrouillé ou à provoquer le passage de la porte dans l'état déverrouillé.

L'invention concerne également un élément semeur comprenant au moins une trémie agencée pour contenir une pluralité d'éléments granulaires et étant reliée par les moyens de conduction à l'ensemble de distribution, caractérisé en ce que l'ensemble de distribution est selon l'invention.

L'invention concerne également un semoir comprenant au moins un châssis sur lequel est monté au moins un élément semeur, caractérisé en ce que l'au moins un élément semeur est selon l'invention.

L'invention concerne également un procédé de verrouillage/déverrouillage d'un ensemble de distribution pour un semoir comprenant une pluralité d'éléments granulaires au moins dans la zone de réserve, caractérisé en ce que l'ensemble de distribution est selon l'invention et en ce que le procédé comprend :
- une étape de verrouillage, lors de laquelle dans la position de fermeture de la porte, l'obturateur est disposé dans la position d'accès et la porte est maintenue dans l'état verrouillé par le dispositif de verrouillage et
- une étape d'isolation, lors de laquelle dans la position de fermeture de la porte, l'organe de sélection est actionné pour faire passer l'obturateur de la position d'accès vers la position obturée et entraîne l'actionnement du dispositif de verrouillage de sorte à autoriser le passage de la porte vers l'état déverrouillé ou à provoquer le passage de la porte dans l'état déverrouillé.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'un ensemble de distribution selon l'invention comprenant une porte maintenue dans un état verrouillé par un dispositif de verrouillage et un organe de sélection configuré pour qu'un obturateur soit dans une position d'accès,
[Fig. 2] la figure 2 représente une vue de face de l'ensemble de distribution de la figure 1,
[Fig. 3] la figure 3 représente une vue en perspective partielle de la porte et du dispositif de verrouillage de l'ensemble de distribution de la figure 1,
[Fig. 4] la figure 4 représente une vue de derrière de l'ensemble de distribution de la figure 1,
[Fig. 5] la figure 5 représente une vue en perspective partielle de l'organe de sélection de l'ensemble de distribution de la figure 1,
[Fig. 6] la figure 6 représente une vue de face de l'ensemble de distribution de la figure 1 sans la porte,
[Fig. 7] la figure 7 représente une vue de face de l'ensemble de distribution selon l'invention comprenant la porte maintenue dans un état verrouillé par le dispositif de verrouillage et l'organe de sélection configuré pour que l'obturateur soit dans une position obturée,
[Fig. 8] la figure 8 représente une vue en perspective partielle de l'organe de sélection de l'ensemble de distribution de la figure 7,
[Fig. 9] la figure 9 représente une vue de face de l'ensemble de distribution selon l'invention comprenant la porte dans un état déverrouillé et l'organe de sélection configuré pour que l'obturateur soit dans la position obturée,
[Fig. 10] la figure 10 représente une vue de face de l'ensemble de distribution selon l'invention comprenant l'organe de sélection configuré pour que l'obturateur soit dans la position obturée et avec la porte retirée,
[Fig. 11] la figure 11 représente une vue en perspective d'une partie de l'organe de sélection et l'obturateur de l'ensemble de distribution de la figure 1, et
[Fig. 12] la figure 12 représente une vue en perspective de la porte et d'un organe de distribution de l'ensemble de distribution de la figure 1.

Comme l'illustrent les figures, un ensemble de distribution pour un semoir comprend au moins :
- un boîtier 1 étanche comprenant au moins une partie fixe 2 et une porte 3 mobile entre une position d'ouverture PON et une position de fermeture POFF,
- un organe de distribution 4 d'une pluralité d'éléments granulaires agencé pour distribuer de façon discrète et singulière une pluralité d'éléments granulaires,

l'organe de distribution 4 étant disposé à l'intérieur du boîtier 1 pour séparer l'intérieur du boîtier 1 en une première chambre 5 et une deuxième chambre 6, lesquelles sont distinctes, la première chambre 5 étant configurée pour recevoir tout ou partie de la pluralité d'éléments granulaires au moins dans une zone de réserve 7 et la deuxième chambre 6 étant fermée par la porte 3 au moins dans sa position de fermeture POFF,
la partie fixe 2 du boîtier 1 comprend en outre une arrivée 8 d'éléments granulaires débouchant dans la première chambre 5 associée à un obturateur 9, ladite arrivée 8 d'éléments granulaires étant configurée pour être reliée à des moyens de conduction 10, 11 reliés à une trémie (non représentée),
l'obturateur 9 étant actionnable par un organe de sélection 12 pour au moins sélectivement disposer l'obturateur 9 dans une position obturée PO de l'arrivée 8 d'éléments granulaires dans laquelle l'obturateur 9 obture l'arrivée 8 d'éléments granulaires ou dans au moins une position d'accès PA de l'arrivée 8 d'éléments granulaires dans laquelle l'obturateur 9 n'obture pas en tout ou partie l'arrivée 8 d'éléments granulaires,
dans la position de fermeture POFF la porte 3 est au moins verrouillée dans un état verrouillé E1 ou déverrouillée dans un état déverrouillé E2 au moins par un dispositif de verrouillage 13.

Conformément à l'invention l'ensemble de distribution est caractérisé en ce que :
dans la position de fermeture POFF de la porte 3 le dispositif de verrouillage 13 et l'organe de sélection 12 sont configurés pour que :
- tant que l'obturateur 9 est dans la position d'accès PA ou n'est pas dans la position obturée PO, la porte 3 est maintenue dans l'état verrouillé E1 par le dispositif de verrouillage 13 et
- l'actionnement de l'organe de sélection 12 pour faire passer l'obturateur 9 de la position d'accès PA vers la position obturée PO entraîne l'actionnement du dispositif de verrouillage 13 de sorte à autoriser le passage de la porte 3 vers l'état déverrouillé E2 ou à provoquer le passage de la porte 3 dans l'état déverrouillé E2.

Avantageusement, grâce à cette configuration, l'opérateur n'est autorisé à ouvrir la porte 3 en la faisant passer de la position de fermeture POFF vers la position d'ouverture PON qu'après que l'organe de sélection 12 n'est actionné l'obturateur 9 pour que ce dernier soit dans la position obturée PO, dans cette dernière position l'obturateur 9 obturant l'arrivée 8 d'éléments granulaires. Par conséquent dans ces conditions, le contenu de la trémie est isolé de la première chambre 5 du boîtier 1, ce qui implique qu'en cas d'ouverture de la porte 3 du boîtier 1 aucun élément granulaire ne continuera à arriver dans la première chambre 5 du boîtier 1 en provenance de la trémie par les moyens de conductions 10, 11. Autrement dit, la fermeture totale de l'arrivée 8 au moyen de l'obturateur 9 est rendue obligatoire si l'on souhaite ouvrir la porte 3.

En effet, la porte 3 est maintenue fermée dans la position de fermeture POFF, si l'obturateur 9 est dans la position d'accès PA laissant entrer les éléments granulaires par l'arrivée 8 dans la première chambre 5 du boîtier 1, du fait du verrouillage de celle-ci par le dispositif de verrouillage 13 qui empêche l'ouverture de la porte 3, celle-ci étant ainsi dans l'état verrouillé E1. En outre, la porte 3 peut être ouverte dans la position d'ouverture PON, si l'obturateur 9 est dans la position obturée PO empêchant les éléments granulaires d'entrer dans la première chambre 5 du boîtier 1 par l'arrivée 8, du fait de l'actionnement du dispositif de verrouillage 13 par l'organe de sélection 12 qui autorise le déverrouillage du dispositif de verrouillage 13 ou provoque le déverrouillage du dispositif de verrouillage 13. Dans ces dernières conditions, le passage de la porte 3 de l'état verrouillé E1 vers l'état déverrouillé E2 est rendu possible ou automatique.

De préférence, le dispositif de verrouillage 13 comprend un premier organe de verrouillage 14 et un deuxième organe de verrouillage 15, dans la position de fermeture POFF, la porte 3 est au moins verrouillée dans l'état verrouillé E1 ou déverrouillée dans l'état déverrouillé E2 au moins par le premier organe de verrouillage 14, le deuxième organe de verrouillage 15 est mobile entre une position de verrouillage PV et une position de déverrouillage PDV, et dans la position de fermeture POFF de la porte 3 le deuxième organe de verrouillage 15 et l'organe de sélection 12 étant configurés pour coopérer entre eux pour que :
- le deuxième organe de verrouillage 15 reste dans la position de verrouillage PV tant que l'obturateur 9 est dans la position d'accès PA ou n'est pas dans la position obturée PO de sorte à empêcher le déverrouillage du premier organe de verrouillage 14 pour maintenir la porte 3 dans l'état verrouillé E1 et
- l'actionnement de l'organe de sélection 12 pour faire passer l'obturateur 9 dans la position obturée PO entraîne le passage du deuxième organe de verrouillage 15 de la position de verrouillage PV vers la position de déverrouillage PDV de sorte à autoriser le déverrouillage du premier organe de verrouillage 14 et le passage de la porte 3 de l'état verrouillé E1 vers l'état déverrouillé E2.

Dans cette configuration, grâce au premier organe de verrouillage 14, la porte 3 peut être verrouillée dans l'état verrouillé E1 ou déverrouillée dans l'état déverrouillé E2 et passer d'un état à l'autre. Grâce au deuxième organe de verrouillage 15 qui peut interagir avec l'organe de sélection 12, la porte 3 peut être bloquée dans l'état verrouillé E1 à condition que le deuxième organe de verrouillage 15 soit dans la position de verrouillage PV et la porte 3 peut être autoriser de passer de l'état verrouillé E1 vers l'état déverrouillé E2 si le deuxième organe de verrouillage 15 est dans la position de déverrouillage PDV. Si l'organe de sélection 12 dispose l'obturateur 9 dans la position d'accès PA, alors le deuxième organe de verrouillage 15 est dans la position de verrouillage PV en revanche si l'organe de sélection 12 dispose l'obturateur 9 dans la position obturée PO alors le deuxième organe de verrouillage 15 est dans la position de déverrouillage PDV.

De préférence, dans l'au moins une position d'accès PA de l'obturateur 9 correspondant à au moins une première position P1 de l'organe de sélection 12, l'organe de sélection 12 est configuré pour ne pas actionner le deuxième organe de verrouillage 15 de sorte que ce dernier reste dans la position de verrouillage PV.

Avantageusement, dans cette configuration, dans la ou les premières positions P1 l'organe de sélection 12 et le deuxième organe de verrouillage 15 ne coopèrent pas mécaniquement entre eux. Le deuxième organe de verrouillage 15 est dans la position de verrouillage PV.

De préférence, dans la position obturée PO de l'obturateur 9 correspondant à une deuxième position de l'organe de sélection 12, l'organe de sélection 12 est configuré pour actionner le deuxième organe de verrouillage 15 de sorte que ce dernier soit dans la position de déverrouillage PDV.

Avantageusement, dans cette configuration, dans la deuxième position l'organe de sélection 12 et le deuxième organe de verrouillage 15 coopèrent mécaniquement entre eux. Le deuxième organe de verrouillage 15 est dans la position de déverrouillage PDV.

De préférence, l'organe de sélection 12 comprend un levier 16 monté mobile sur la partie fixe 2 du boîtier 1 au moins positionnable sélectivement dans l'au moins une première position P1 et la deuxième position et étant relié mécaniquement à l'obturateur 9 et comprenant de préférence des moyens de préhension 26 de sorte à actionner manuellement le levier 16.

Avantageusement, cet exemple non limitatif d'organe de sélection 12 est aisé à manipuler pour l'opérateur.

De préférence, dans la position de fermeture POFF la porte 3 recouvre une ouverture 17 de la partie fixe 2, la porte 3 étant montée vissable/dévissable par rapport à ladite ouverture 17 par le premier organe de verrouillage 14 dans la position de fermeture POFF entre l'état verrouillé E1 dans laquelle la porte 3 est vissée et l'état déverrouillé E2 dans laquelle la porte 3 est dévissée.

Avantageusement, dans cet exemple non limitatif si la porte 3 est vissée sur la partie fixe 2 celle-ci est dans l'état verrouillé E1, et si la porte 3 est dévissée de la partie fixe 2 celle-ci est dans l'état déverrouillé E2. Dans cet état déverrouillé E2, la porte 3 n'est plus fixée à la partie fixe 2 et peut donc être retirée de la partie fixe 2 de sorte à ne plus recouvrir l'ouverture 17 et à être disposée dans la position d'ouverture PON.

De préférence, le deuxième organe de verrouillage 15 comprend un loquet 18 monté pivotant sur la partie fixe 2 du boîtier 1 entre la position de verrouillage PV et la position de déverrouillage PDV et rappelé par des moyens de rappel 19 monté sur la partie fixe 2 du boîtier 1 et une saillie 20 saillante de la périphérie externe de la porte 3, le loquet 18 étant maintenu contre la saillie 20 par les moyens de rappel 19 dans la position de verrouillage PV de sorte à empêcher la rotation de la porte 3 pour maintenir la porte 3 dans l'état verrouillé E1 et le loquet 18 étant à distance de la saillie 20 dans la position de déverrouillage PDV de sorte à autoriser la rotation de la porte 3 pour autoriser le passage de la porte 3 vers l'état déverrouillé E2.

Avantageusement, dans cet exemple non limitatif si le loquet 18 est contre la saillie 20, ce qui correspond à la position de verrouillage PV, alors la porte 3 ne peut être entraînée en rotation et donc ne peut être dévissée et est ainsi bloquée dans l'état verrouillé E1. En revanche, si le loquet 18 est à distance de la saillie 20, ce qui correspond à la position de déverrouillage PDV, la porte 3 peut être entraînée en rotation et donc être dévissée et peut ainsi passer dans la position déverrouillée E2.

De préférence, le loquet 18 comprend une portion actionnable 21 par le levier 16 et lors du passage dans la deuxième position, le levier 16 est configuré pour actionner la portion actionnable 21 et pour exercer une force allant à l'encontre de la force de rappel des moyens de rappel 19 et faire pivoter le loquet 18 dans la position de déverrouillage PDV.

Dans cet exemple non limitatif, grâce à la coopération mécanique entre l'organe de sélection 12 et le deuxième organe de verrouillage 15 qui est sous la forme du loquet 18 pivotant, lors du passage de la première position P1 vers la deuxième position de l'organe de sélection 12, le passage de la position de verrouillage PV vers la position de déverrouillage PDV du deuxième organe de verrouillage 15 peut être provoqué par l'intermédiaire de la portion actionnable 21.

L'invention concerne également un élément semeur comprenant au moins une trémie agencée pour contenir une pluralité d'éléments granulaires et étant reliée par les moyens de conduction 10, 11 à l'ensemble de distribution, caractérisé en ce que l'ensemble de distribution est selon l'invention et tel que décrit précédemment.

L'invention concerne également un semoir comprenant au moins un châssis sur lequel est monté au moins un élément semeur, caractérisé en ce que l'au moins un élément semeur est selon l'invention et tel que décrit précédemment.

L'invention concerne également un procédé de verrouillage/déverrouillage d'un ensemble de distribution pour un semoir comprenant une pluralité d'éléments granulaires au moins dans la zone de réserve 7, caractérisé en ce que l'ensemble de distribution est selon l'une quelconque des revendications l'invention et en ce que le procédé comprend :
- une étape de verrouillage, lors de laquelle dans la position de fermeture POFF de la porte 3, l'obturateur 9 est disposé dans la position d'accès PA et la porte 3 est maintenue dans l'état verrouillé E1 par le dispositif de verrouillage 13 et
- une étape d'isolation, lors de laquelle dans la position de fermeture POFF de la porte 3, l'organe de sélection 12 est actionnée pour faire passer l'obturateur 9 de la position d'accès PA vers la position obturée PO et entraîne l'actionnement du dispositif de verrouillage 13 de sorte à autoriser le passage de la porte 3 vers l'état déverrouillé E2 ou à provoquer le passage de la porte 3 dans l'état déverrouillé E2.

Avantageusement, grâce au procédé selon l'invention, lors de l'étape de verrouillage, l'arrivée 8 est ouverte partiellement ou totalement par l'obturateur 9 (positon d'accès PA) et la porte 3 est maintenue fermée par le dispositif de verrouillage 13. Même si l'arrivée 8 permet l'entrée des éléments granulaires dans la première chambre 5 du boîtier 1, la porte 3 ne peut être ouverte, par conséquent aucun éléments granulaires ne peut sortir du boîtier 1.

Lors de l'étape d'isolation, l'arrivée 8 est fermée par l'obturateur 9 (position obturée PO) et la porte 3 peut être ouverte. L'arrivée 8 ne permet plus l'entrée de nouveaux éléments granulaires dans la première chambre 5 du boîtier 1, la porte 3 peut être ouverte, par conséquent aucun éléments granulaires provenant directement de la trémie par les moyens de conductions 10, 11 ne peut sortir du boîtier 1, et cela même si l'organe de distribution 4 est par la suite retiré. Eventuellement seul des éléments granulaires restés dans la zone de réserve 7 pourront sortir du boîtier 1 si l'organe de distribution 4 est retiré après l'ouverture de la porte 3. Le cas échéant ces éléments granulaires restés dans la zone de réserve 7 pourront être vidangés par une goulotte de vidange (non représentée) pour éviter qu'ils ne tombent au sol.

Le boîtier 1 comprend la partie fixe 2 et la porte 3 qui est mobile par rapport à la partie fixe 2 et permet d'ouvrir le boîtier 1 pour donner accès à l'intérieur du boîtier 1 ou de le fermer. La porte 3 adopte ainsi soit une position d'ouverture PON, soit une position de fermeture POFF. Dans la position d'ouverture PON, la porte 3 peut être le cas échéant totalement retirée de la partie fixe 2 ou y être raccordée tout en donnant accès à l'intérieur du boîtier 1. La porte 3 est de préférence de forme cylindrique et présente un fond plat.

L'organe de distribution 4 comprend de préférence usuellement un disque de distribution perforé entrainé en rotation de préférence par un moteur. Le disque de distribution sépare le boîtier en deux chambres, la première chambre 5 et la deuxième chambre 6, dans lesquelles les pressions d'air sont de préférence différentes. La première chambre 5 et la deuxième chambre 6 ont préférentiellement une forme sensiblement cylindrique. La porte 3 reçoit de préférence le disque de distribution, mais cet exemple n'est pas limitatif.

La zone de réserve 7 est située dans la première chambre 5. Elle peut contenir une certaine quantité d'éléments granulaires en provenance de la trémie. La zone de réserve 7 se situe en bas de la partie fixe 2 du boîtier 1.

L'arrivée 8 d'éléments granulaires est située dans la partie fixe 2 et s'ouvre sur la première chambre 5. De préférence, l'arrivée 8 consiste en une ouverture.

L'obturateur 9 est prévu pour adopter la ou les positions d'accès PA dans laquelle l'obturateur 9 ne recouvre pas l'arrivée 8 ou ne recouvre l'arrivée 8 que partiellement ou la position obturée PO dans laquelle l'obturateur 9 recouvre l'arrivée 8. Dans la ou les positions d'accès PA, l'obturateur 9 permet qu'un flux d'éléments granulaires différent arrive par l'arrivée 8 dans la première chambre 5. Dans la position obturée PO, aucun élément granulaire ne peut arriver par l'arrivée 8 dans la première chambre 5.

Les moyens de conduction 10, 11 ont pour fonction de relier la trémie à la première chambre 5 du boîtier 1 et débouchent ainsi sur l'arrivée 8. Les moyens de conduction comportent de préférence au moins un conduit et préférentiellement un conduit inférieur 10 et un conduit supérieur 11. Le conduit inférieur 10 débouche dans la première chambre 5 par l'arrivée 8. Le conduit supérieur 11 est prévu pour être relié à la trémie et au conduit inférieur 10.

La trémie permet de stocker des éléments granulaires, par exemple des graines ou des intrants sous forme granulaire.

L'organe de sélection 12 permet de commander l'écoulement des éléments granulaires par l'arrivée 8. En effet, l'organe de sélection 12 permet d'actionner l'obturateur 9 pour le faire passer dans la ou les positions d'accès PA ou dans la position obturée PO. L'organe de sélection 12 peut lui-même adopter une ou plusieurs premières positions P1 dans laquelle la ou les positions d'accès PA sont sélectionnées ou une deuxième position dans laquelle la position obturée PO est sélectionnée.

L'organe de sélection 12 comprend de préférence le levier 16 relié à l'obturateur 9 par des moyens de fixation 22. Ce levier 16 est de préférence monté sur la partie fixe 2 par une liaison glissière formée entre un plot saillant 23 du levier 16 et une ouverture traversante 24 allongée qui est ménagée sur la partie fixe 2 et qui est courbée. Le plot saillant 23 est monté coulissant dans l'ouverture traversante 24. L'ouverture traversante 24 comprend de préférence sur sa paroi interne 25 des indentations 25' matérialisant les différentes premières positions P1 et par exemple repérées par des affichages. Le levier 16 comprend de préférence à son extrémité libre 16a des moyens de préhension 26 sous la forme d'une poignée pour faciliter la préhension. L'obturateur 9 comprend préférentiellement une portion plane 29 au niveau de son extrémité libre 30 opposée à l'extrémité libre 16a du levier 16. La portion plane 29 a des dimensions permettant de recouvrir l'arrivée 8. Le levier 16 peut actionner la portion actionnable 21 du loquet 18 lorsque l'organe de sélection 12 est dans la deuxième position, sinon il est à distance de celle-ci.

Le dispositif de verrouillage 13 a pour fonction de verrouiller la porte 3 dans un état verrouillé E1, dans lequel la porte 3 reste dans la position de fermeture POFF tant que l'obturateur 9 n'est pas dans la position obturée PO. Le dispositif de verrouillage 13 a aussi pour fonction de déverrouiller la porte 3 dans un état déverrouillé E2, dans lequel la porte 3 peut être ouverte dans la position d'ouverture PON, à condition que l'obturateur 9 soit dans la position obturée PO. De préférence, le dispositif de verrouillage 13 comprend un premier organe de verrouillage 14 et un deuxième organe de verrouillage 15. Ainsi, un double niveau de verrouillage est obtenu avantageusement.

La position du premier organe de verrouillage 14 est dépendante de la position du deuxième organe de verrouillage 15. Ainsi, si le deuxième organe de verrouillage 15 est dans la position de verrouillage PV, le premier organe de verrouillage 14 verrouille la porte 3 dans l'état verrouillé E1. Au contraire, si le deuxième organe de verrouillage 15 est dans la position de déverrouillage PDV, le premier organe de verrouillage 14 permet le déverrouillage de la porte 3 vers l'état déverrouillé E2.

La position du deuxième organe de verrouillage 15 a pour particularité d'être dépendante de la position de l'obturateur 9. Ainsi si l'obturateur 9 est dans la ou les positions d'accès PA alors le deuxième organe de verrouillage 15 est dans la position de verrouillage PV. Au contraire si l'obturateur 9 est dans la position obturée PO alors le deuxième organe de verrouillage 15 est dans la position de déverrouillage PDV. De préférence, le deuxième organe de verrouillage 15 est actionnable par l'organe de sélection 12 qui est relié à l'obturateur 9. Grâce à cette dépendance, il est obligatoire que l'obturateur 9 soit dans la position obturée PO, autrement dit que l'organe de sélection 12 soit dans la deuxième position, et donc que la trémie et le boîtier 1 soit isolé l'un de l'autre, pour que la porte 3 puisse être ouverte dans la position d'ouverture PON car dans ces conditions le déverrouillage du premier organe de verrouillage 14 est possible.

L'ouverture 17 donne de préférence accès à l'intérieur de la première chambre 5 lorsque la porte 3 est retirée. L'ouverture 17 est de préférence de forme circulaire.

Le loquet 18 est de préférence monté mobile sur la partie fixe 2 par un axe de rotation 27. Il est en appui contre la saillie 20 dans la position de verrouillage PV. Il est à distance de la saillie 20 dans la position de déverrouillage PDV.

Les moyens de rappel 19 comprennent de préférence un ressort de compression 28. Le ressort de compression 28 comprime le loquet 18 contre la saillie 20 dans la position de verrouillage PV.

La saillie 20 est de préférence une nervure ou une dent.

La portion actionnable 21 du loquet 18 est de préférence une portion saillante de type pion ou téton.

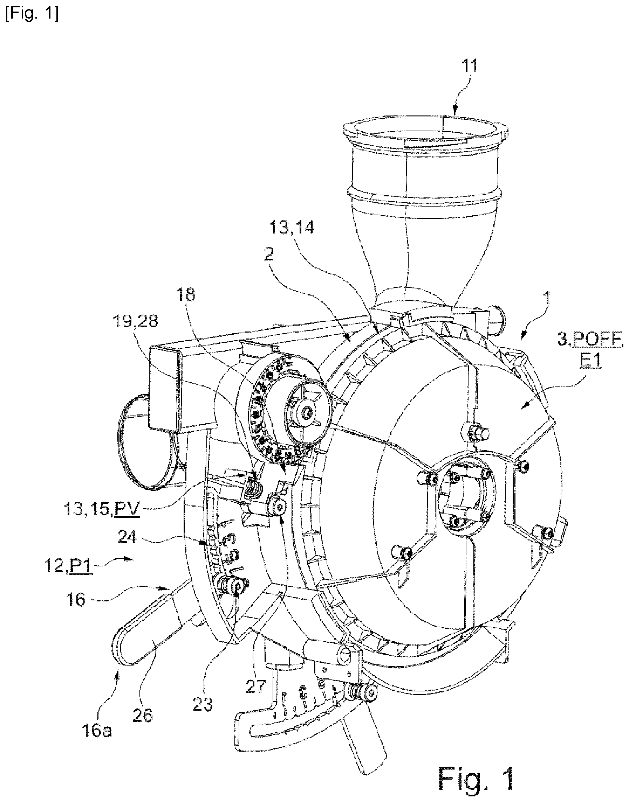

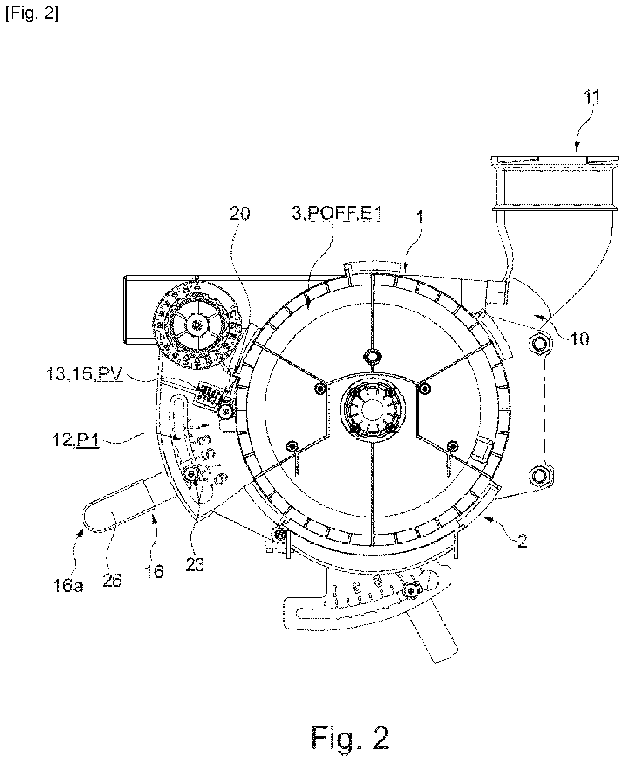

Les figures 1 et 2 illustrent un ensemble de distribution selon l'invention comprenant le boîtier 1 avec la porte 3 maintenue fermée dans la position de fermeture POFF sur la partie fixe 2 dans l'état verrouillé E1 par le dispositif de verrouillage 13 et montrant l'organe de sélection 12 dans la première position P1. Le dispositif de verrouillage 13 comprend le premier organe de verrouillage 14 et le deuxième organe de verrouillage 15. L'organe de sélection 12 est dans la première position P1 et donc le deuxième organe de verrouillage 15 est dans la position de verrouillage PV. Il en résulte que comme le deuxième organe de verrouillage 15 est dans la position de verrouillage PV alors le premier organe de verrouillage 14 verrouille la porte 3 dans l'état verrouillé E1. En effet, le loquet 18 est contre la saillie 20 ce qui empêche toute rotation de la porte 3 et donc son passage dans l'état déverrouillé E2.

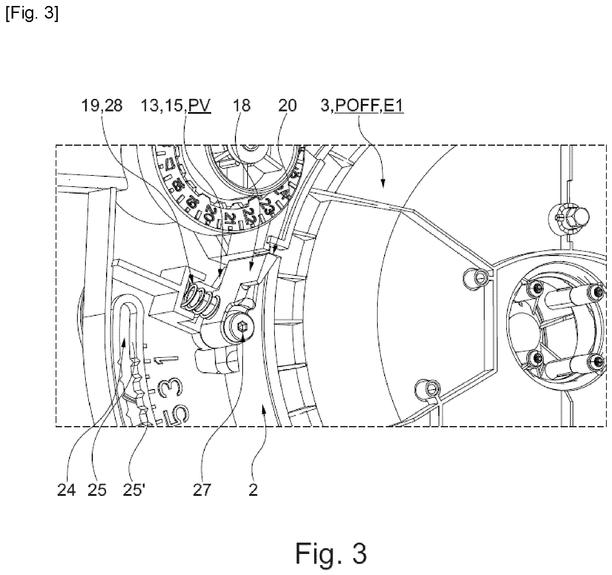

La figure 3 illustre partiellement l'ensemble de distribution des figures 1 et 2 et montre que dans la position de verrouillage PV du deuxième organe de verrouillage 15, qui comprend le loquet 18, ce dernier est contre la saillie 20 ce qui empêche toute rotation de la porte 3 et donc son passage dans l'état déverrouillé E2. La porte 3 est maintenue fermée dans la position de fermeture POFF.

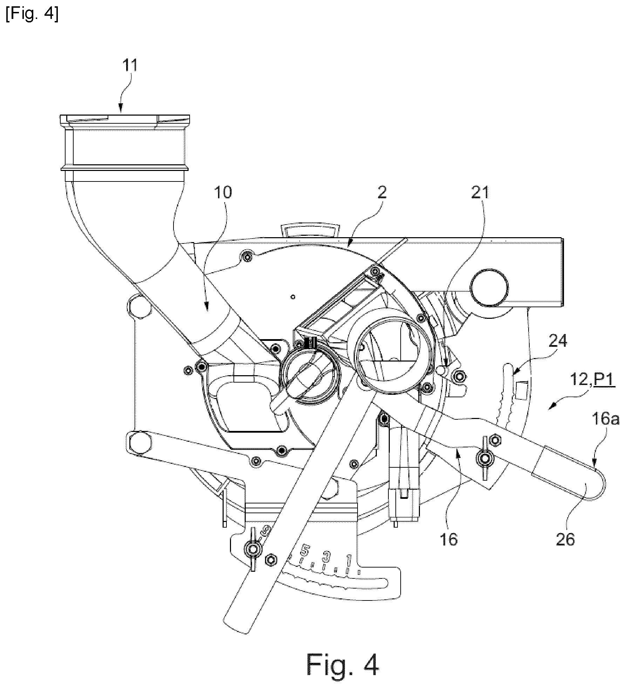

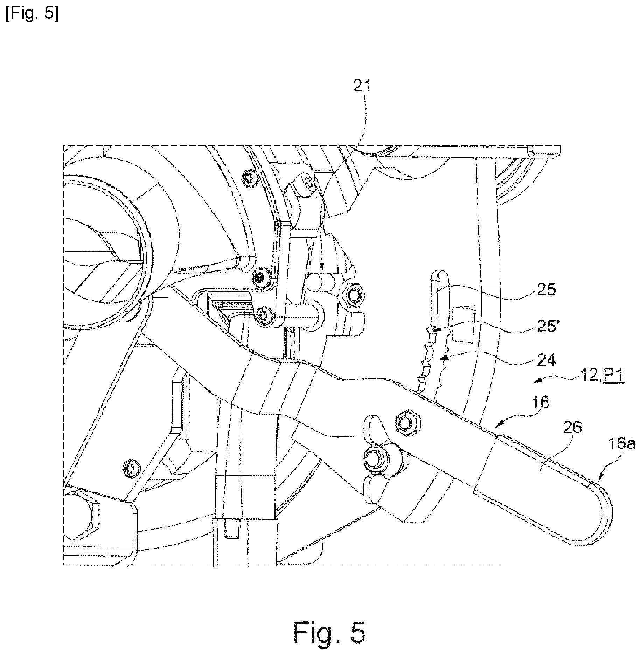

Les figures 4 et 5 illustrent l'ensemble de distribution des figures précédentes et montrent que si l'organe de sélection 12 est dans la première position P1, le levier 16 est à distance de la portion actionnable 21 du loquet 18 et ne l'actionne pas.

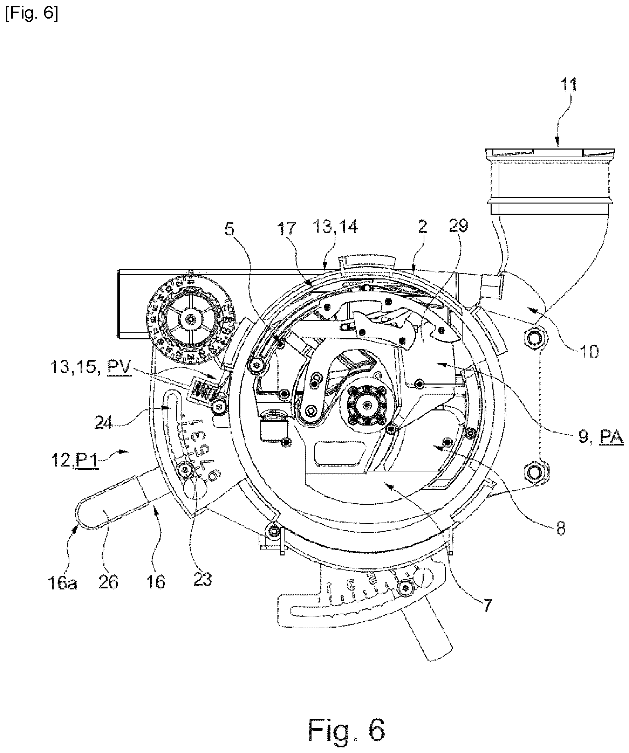

La figure 6 illustre l'ensemble de distribution des figures précédentes sans la porte 3 et montre l'organe de sélection 12 dans la première position P1 pour que l'obturateur 9 soit dans la position d'accès PA. L'arrivée 8 d'éléments granulaires est située dans la partie fixe 2 et s'ouvre sur la première chambre 5. L'arrivée 8 consiste en une ouverture. L'obturateur 9 est dans la position d'accès PA dans laquelle il ne recouvre l'arrivée 8 que partiellement.

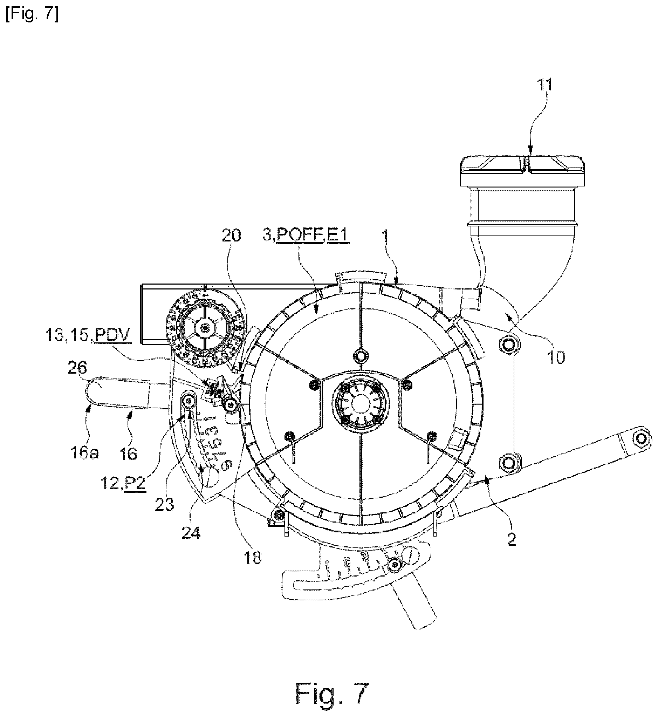

La figure 7 illustre l'ensemble de distribution qui diffère de celui des figures 1 et 2 par la position de l'organe de sélection 12 et du deuxième organe de verrouillage 15. L'organe de sélection 12 est dans la deuxième position P2 et donc le deuxième organe de verrouillage 15 est dans la position de déverrouillage PDV. Il en résulte que comme le deuxième organe de verrouillage 15 est dans la position de déverrouillage PDV alors la porte 3, qui est vissée sur la partie fixe 2 et est dans l'état verrouillé E1, peut passer de l'état verrouillé E1 dans l'état déverrouillé E2. En effet, le loquet 18 est à distance de la saillie 20 ce qui autorise la rotation de la porte 3 et donc son passage dans l'état déverrouillé E2, dans l'exemple illustré cette rotation peut se faire dans le sens antihoraire.

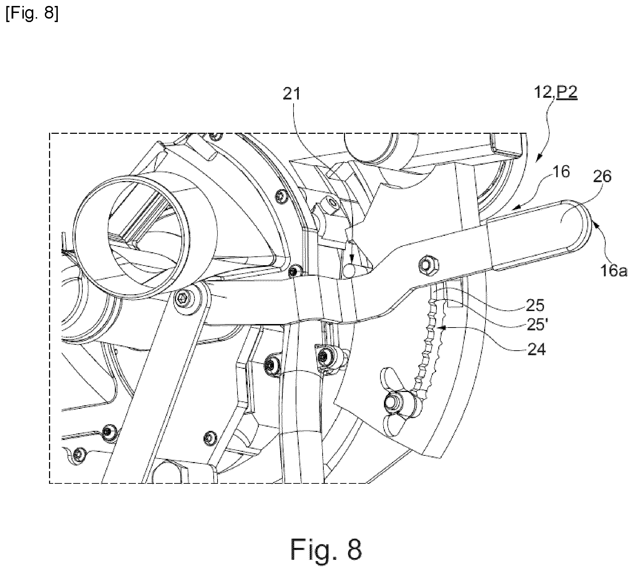

La figure 8 illustre partiellement l'ensemble de distribution de la figure 7 et montre que si l'organe de sélection 12 est dans la deuxième position P2, le levier 16 est en contact de la portion actionnable 21 du loquet 18 et l'actionne.

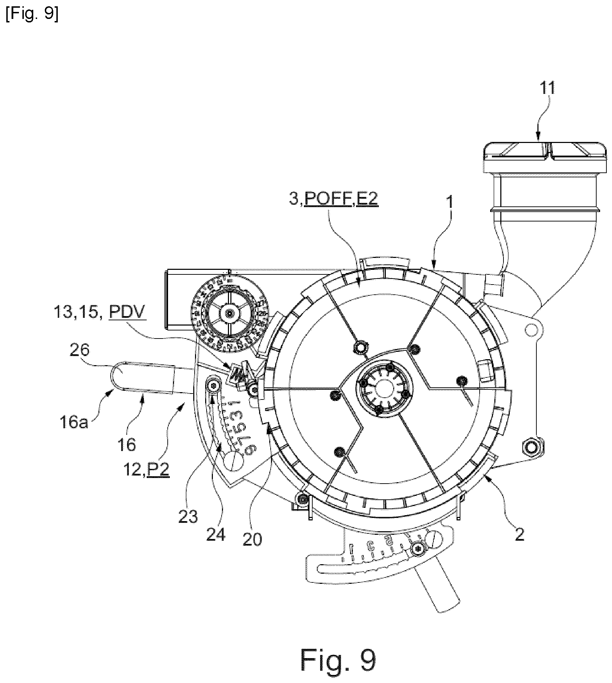

La figure 9 illustre l'ensemble de distribution qui diffère de celui de la figure 7 par le fait que la porte 3 est désormais dans l'état déverrouillé E2 et peut donc passer de la position de fermeture POFF dans laquelle elle se trouve vers la position d'ouverture PON. En effet, la porte 3 est dévissée de la partie fixe 2 dans l'état déverrouillé E2 mais n'est plus fixée à la partie fixe 2 et peut donc être retirée de la partie fixe 2 de sorte à ne plus recouvrir l'ouverture 17 et à être disposée dans la position d'ouverture PON.

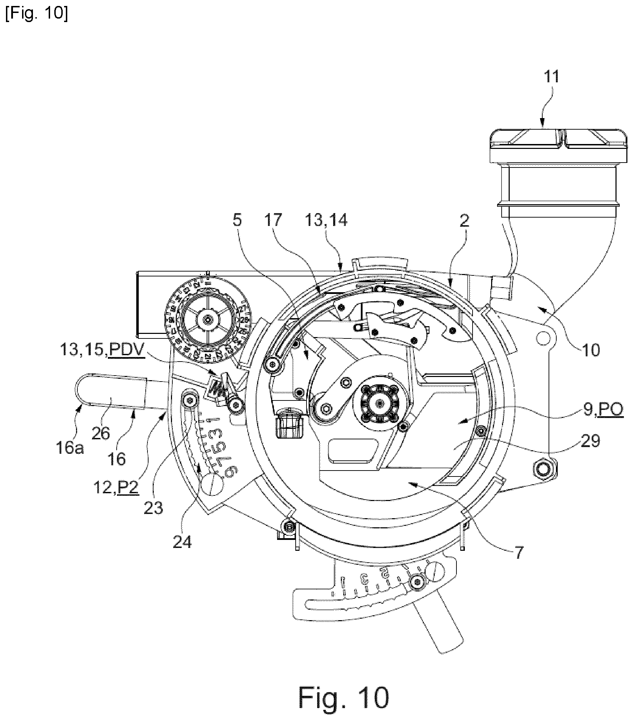

La figure 10 illustre l'ensemble de distribution qui diffère de celui de la figure 9 par le fait que la porte 3 est retirée de la partie fixe 2 et ne recouvre plus l'ouverture 17. En outre, on observe qu'étant donné que l'organe de sélection 12 est dans la deuxième position P2, l'obturateur 9 est dans la position obturée PO dans laquelle il recouvre totalement l'arrivée 8 par sa portion plane 29.

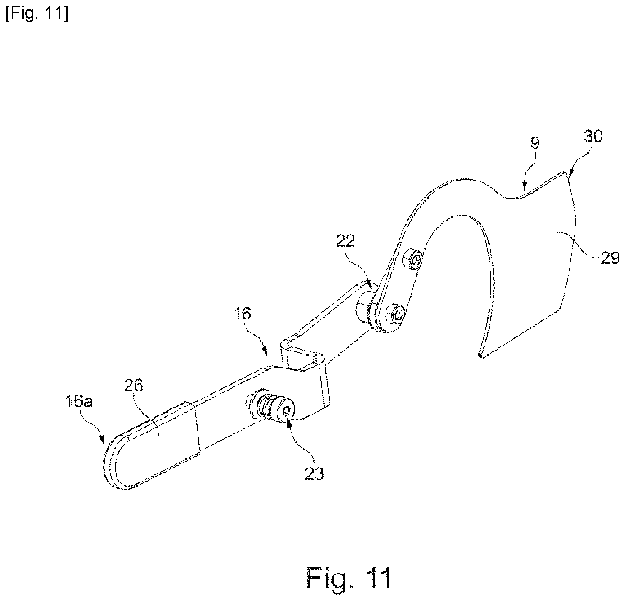

La figure 11 illustre une partie de l'organe de sélection 12, à savoir le levier 16, et l'obturateur 9. Le levier 16 est relié à l'obturateur 9 par les moyens de fixation 22. Le levier 16 comprend à son extrémité libre 16a les moyens de préhension 26. L'obturateur 9 comprend la portion plane 29 au niveau de son extrémité libre 30 opposée à l'extrémité libre 16a du levier 16.

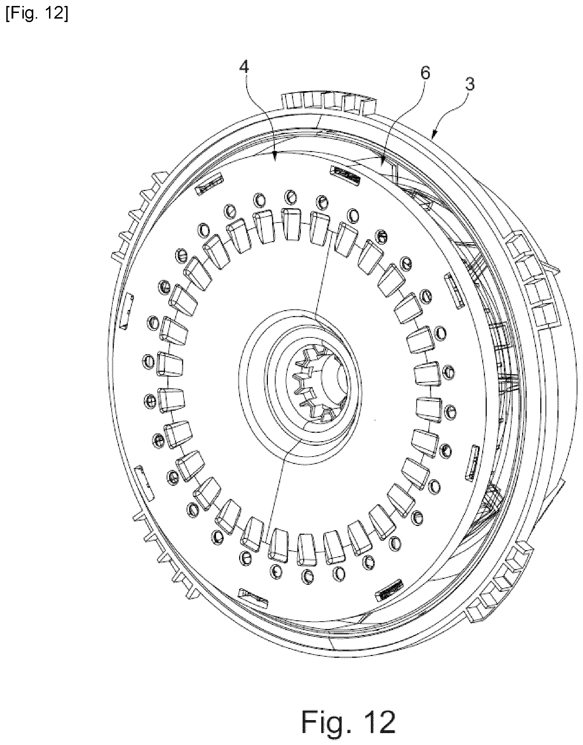

La figure 12 illustre la porte 3 et l'organe de distribution 4 de l'ensemble de distribution. L'organe de distribution 4 est sous la forme du disque de distribution perforé. La porte 3 reçoit le disque de distribution ce qui forme la deuxième chambre 6. La porte 3 est de forme cylindrique.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini dans les revendications annexées.

## Revendications

1. Ensemble de distribution pour un semoir comprenant au moins
- un boîtier (1) étanche comprenant au moins une partie fixe (2) et une porte (3) mobile entre une position d'ouverture (PON) et une position de fermeture (POFF),
- un organe de distribution (4) d'une pluralité d'éléments granulaires agencé pour distribuer de façon discrète et singulière une pluralité d'éléments granulaires, l'organe de distribution (4) étant disposé à l'intérieur du boîtier (1) pour séparer l'intérieur du boîtier (1) en une première chambre (5) et une deuxième chambre (6), lesquelles sont distinctes, la première chambre (5) étant configurée pour recevoir tout ou partie de la pluralité d'éléments granulaires au moins dans une zone de réserve (7) et la deuxième chambre (6) étant fermée par la porte (3) au moins dans sa position de fermeture (POFF),
la partie fixe (2) du boîtier (1) comprend en outre une arrivée (8) d'éléments granulaires débouchant dans la première chambre (5) associée à un obturateur (9), ladite arrivée (8) d'éléments granulaires étant configurée pour être reliée à des moyens de conduction (10, 11) reliés à une trémie,
l'obturateur (9) étant actionnable par un organe de sélection (12) pour au moins sélectivement disposer l'obturateur (9) dans une position obturée (PO) de l'arrivée (8) d'éléments granulaires dans laquelle l'obturateur (9) obture l'arrivée (8) d'éléments granulaires ou dans une position d'accès (PA) de l'arrivée (8) d'éléments granulaires dans laquelle l'obturateur (9) n'obture pas en tout ou partie l'arrivée (8) d'éléments granulaires,
dans la position de fermeture (POFF) la porte (3) est au moins verrouillée dans un état verrouillé (E1) ou déverrouillée dans un état déverrouillé (E2) au moins par un dispositif de verrouillage (13),
et
dans la position de fermeture (POFF) de la porte (3) le dispositif de verrouillage (13) et l'organe de sélection (12) sont configurés pour que :
- tant que l'obturateur (9) est dans la position d'accès (PA) ou n'est pas dans la position obturée (PO), la porte (3) est maintenue dans l'état verrouillé (E1) par le dispositif de verrouillage (13) et **caractérisé en ce que**:
- l'actionnement de l'organe de sélection (12) pour faire passer l'obturateur (9) de la position d'accès (PA) vers la position obturée (PO) entraîne l'actionnement du dispositif de verrouillage (13) de sorte à autoriser le passage de la porte (3) vers l'état déverrouillé (E2) ou à provoquer le passage de la porte (3) dans l'état déverrouillé (E2).

2. Ensemble de distribution selon la revendication 1, **caractérisé en ce que** le dispositif de verrouillage (13) comprend un premier organe de verrouillage (14) et un deuxième organe de verrouillage (15), **en ce que** dans la position de fermeture (POFF), la porte (3) est au moins verrouillée dans l'état verrouillé (E1) ou déverrouillée dans l'état déverrouillé (E2) au moins par le premier organe de verrouillage (14), le deuxième organe de verrouillage (15) est mobile entre une position de verrouillage (PV) et une position de déverrouillage (PDV), et **en ce que** dans la position de fermeture (POFF) de la porte (3) le deuxième organe de verrouillage (15) et l'organe de sélection (12) étant configurés pour coopérer entre eux pour que :
- le deuxième organe de verrouillage (15) reste dans la position de verrouillage (PV) tant que l'obturateur (9) est dans la position d'accès (PA) ou n'est pas dans la position obturée (PO) de sorte à empêcher le déverrouillage du premier organe de verrouillage (14) pour maintenir la porte (3) dans l'état verrouillé (E1) et
- l'actionnement de l'organe de sélection (12) pour faire passer l'obturateur (9) dans la position obturée (PO) entraîne le passage du deuxième organe de verrouillage (15) de la position de verrouillage (PV) vers la position de déverrouillage (PDV) de sorte à autoriser le déverrouillage du premier organe de verrouillage (14) et le passage de la porte (3) de l'état verrouillé (E1) vers l'état déverrouillé (E2).

3. Ensemble de distribution selon la revendication 2, **caractérisé en ce que** dans l'au moins une position d'accès (PA) de l'obturateur (9) correspondant à au moins une première position (P1) de l'organe de sélection (12), l'organe de sélection (12) est configuré pour ne pas actionner le deuxième organe de verrouillage (15) de sorte que ce dernier reste dans la position de verrouillage (PV).

4. Ensemble de distribution selon l'une quelconque des revendications 2 à 3, **caractérisé en ce que** dans la position obturée (PO) de l'obturateur (9) correspondant à une deuxième position de l'organe de sélection (12), l'organe de sélection (12) est configuré pour actionner le deuxième organe de verrouillage (15) de sorte que ce dernier soit dans la position de déverrouillage (PDV).

5. Ensemble de distribution selon les revendications 3 et 4, **caractérisé en ce que** l'organe de sélection (12) comprend un levier (16) monté mobile sur la partie fixe (2) du boîtier (1) au moins positionnable sélectivement dans l'au moins une première position (P1) et la deuxième position et étant relié mécaniquement à l'obturateur (9) et comprenant de préférence des moyens de préhension (26) de sorte à actionner manuellement le levier (16).

6. Ensemble de distribution selon l'une quelconque des revendications 1 à 5, **caractérisé en ce que** dans la position de fermeture (POFF) la porte (3) recouvre une ouverture (17) de la partie fixe (2), la porte (3) étant montée vissable/dévissable par rapport à ladite ouverture (17) par le premier organe de verrouillage (14) dans la position de fermeture (POFF) entre l'état verrouillé (E1) dans laquelle la porte (3) est vissée et l'état déverrouillé (E2) dans laquelle la porte (3) est dévissée.

7. Ensemble de distribution selon la revendication 6, **caractérisé en ce que** le deuxième organe de verrouillage (15) comprend un loquet (18) monté pivotant sur la partie fixe (2) du boîtier (1) entre la position de verrouillage (PV) et la position de déverrouillage (PDV) et rappelé par des moyens de rappel (19) monté sur la partie fixe (2) du boîtier (1) et une saillie (20) saillante de la périphérie externe de la porte (3), le loquet (18) étant maintenu contre la saillie (20) par les moyens de rappel (19) dans la position de verrouillage (PV) de sorte à empêcher la rotation de la porte (3) pour maintenir la porte (3) dans l'état verrouillé (E1) et le loquet (18) étant à distance de la saillie (20) dans la position de déverrouillage (PDV) de sorte à autoriser la rotation de la porte (3) pour autoriser le passage de la porte (3) vers l'état déverrouillé (E2).

8. Ensemble de distribution selon les revendications 5, 6 et 7, **caractérisé en ce que** le loquet (18) comprend une portion actionnable (21) par le levier (16) et **en ce que** lors du passage dans la deuxième position, le levier (16) est configuré pour actionner la portion actionnable (21) et pour exercer une force allant à l'encontre de la force de rappel des moyens de rappel (19) et faire pivoter le loquet (18) dans la position de déverrouillage (PDV).

9. Elément semeur comprenant un ensemble de distribution et au moins une trémie agencée pour contenir une pluralité d'éléments granulaires et étant reliée par les moyens de conduction (10, 11) à l'ensemble de distribution, **caractérisé en ce que** l'ensemble de distribution est selon l'une quelconque des revendications 1 à 8.

10. Semoir comprenant au moins un châssis sur lequel est monté au moins un élément semeur, **caractérisé en ce que** l'au moins un élément semeur est selon la revendication 9.

11. Procédé de verrouillage/déverrouillage d'un ensemble de distribution pour un semoir comprenant une pluralité d'éléments granulaires au moins dans la zone de réserve (7), **caractérisé en ce que** l'ensemble de distribution est selon l'une quelconque des revendications 1 à 8 et **en ce que** le procédé comprend :
- une étape de verrouillage, lors de laquelle dans la position de fermeture (POFF) de la porte (3), l'obturateur (9) est disposé dans la position d'accès (PA) et la porte (3) est maintenue dans l'état verrouillé (E1) par le dispositif de verrouillage (13) et
- une étape d'isolation, lors de laquelle dans la position de fermeture (POFF) de la porte (3), l'organe de sélection (12) est actionné pour faire passer l'obturateur (9) de la position d'accès (PA) vers la position obturée (PO) et entraîne l'actionnement du dispositif de verrouillage (13) de sorte à autoriser le passage de la porte (3) vers l'état déverrouillé (E2) ou à provoquer le passage de la porte (3) dans l'état déverrouillé (E2).

## Patentansprüche

1. Verteilereinheit für eine Sämaschine, umfassend mindestens:
- - ein dichtes Gehäuse (1), das mindestens einen festen Teil (2) und eine Tür (3) umfasst, die zwischen einer Öffnungsstellung (PON) und einer Schließstellung (POFF) beweglich ist,
- ein Verteilerelement (4) für eine Vielzahl von körnigen Elementen, das so ausgelegt ist, dass es eine Vielzahl von körnigen Elementen diskret und einzeln verteilt,
wobei das Verteilerelement (4) im Inneren des Gehäuses (1) angeordnet ist, um den Innenraum des Gehäuses (1) in eine erste Kammer (5) und eine zweite Kammer (6) zu unterteilen, die voneinander getrennt sind, wobei die erste Kammer (5) so ausgebildet ist, dass sie die Vielzahl von körnigen Elementen ganz oder teilweise zumindest in einem Vorratsbereich (7) aufnimmt, und die zweite Kammer (6) durch die Tür (3) zumindest in ihrer Schließstellung (POFF) verschlossen ist,
der feste Teil (2) des Gehäuses (1) umfasst ferner einen Einlass (8) für körnige Elemente, der in die erste Kammer (5) mündet, die mit einem Verschluss (9) verbunden ist, wobei der genannte Einlass (8) für körnige Elemente so ausgebildet ist, dass er mit Fördermitteln (10, 11) verbunden werden kann, die an einen Trichter angeschlossen sind,
wobei der Verschluss (9) durch ein Auswahlorgan (12) betätigbar ist, um den Verschluss (9) zumindest selektiv in eine Verschlussposition (PO) des Einlasses (8) für körnige Elemente zu bringen, in der der Verschluss (9) den Einlass (8) für körnige Elemente verschließt, oder in eine Zugangsposition (PA) des Einlasses (8) für körnige Elemente, in der der Verschluss (9) den Einlass (8) für körnige Elemente nicht ganz oder teilweise verschließt,
in der Schließstellung (POFF) ist die Tür (3) zumindest durch eine Verriegelungsvorrichtung (13) entweder in einem verriegelten Zustand (E1) oder in einem entriegelten Zustand (E2) verriegelt bzw. entriegelt,
und
in der Schließstellung (POFF) der Tür (3) sind die Verriegelungsvorrichtung (13) und das Auswahlorgan (12) so ausgelegt, dass:
- solange sich der Verschluss (9) in der Zugangsposition (PA) befindet oder sich nicht in der Verschlussposition (PO) befindet, wird die Tür (3) durch die Verriegelungsvorrichtung (13) im verriegelten Zustand (E1) gehalten, und
**dadurch gekennzeichnet, dass**:
- die Betätigung des Auswahlorgans (12), um den Verschluss (9) von der Zugangsposition (PA) in die Verschlussposition (PO) zu bringen, bewirkt die Betätigung der Verriegelungsvorrichtung (13), sodass der Übergang der Tür (3) in den entriegelten Zustand (E2) zu ermöglichen oder den Übergang der Tür (3) in den entriegelten Zustand (E2) zu bewirken.

2. Verteilereinheit nach Anspruch 1, **dadurch gekennzeichnet, dass** die Verriegelungsvorrichtung (13) ein erstes Verriegelungselement (14) und ein zweites Verriegelungselement (15) umfasst, dass in der Schließstellung (POFF) die Tür (3) zumindest durch das erste Verriegelungselement (14) im verriegelten Zustand (E1) verriegelt oder im entriegelten Zustand (E2) entriegelt ist, das zweite Verriegelungselement (15) zwischen einer Verriegelungsstellung (PV) und einer Entriegelungsstellung (PDV) beweglich ist, und dass in der Schließstellung (POFF) der Tür (3) das zweite Verriegelungselement (15) und das Auswahlorgan (12) so ausgebildet sind, dass sie miteinander zusammenwirken, damit:
- das zweite Verriegelungselement (15) verbleibt in der Verriegelungsstellung (PV), solange sich der Verschluss (9) in der Zugangsposition (PA) befindet oder sich nicht in der Verschlussposition (PO) befindet, um so die Entriegelung des ersten Verriegelungselements (14) zu verhindern, um die Tür (3) im verriegelten Zustand (E1) zu halten, und
- die Betätigung des Auswahlorgans (12), um den Verschluss (9) in die Verschlussposition (PO) zu bringen, bewirkt, dass das zweite Verriegelungselement (15) von der Verriegelungsstellung (PV) in die Entriegelungsstellung (PDV) übergeht, sodass die Entriegelung des ersten Verriegelungselements (14) und den Übergang der Tür (3) vom verriegelten Zustand (E1) in den entriegelten Zustand (E2) ermöglicht.

3. Verteilereinheit nach Anspruch 2, **dadurch gekennzeichnet, dass** in der mindestens einen Zugangsposition (PA) des Verschlusses (9), die mindestens einer ersten Position (P1) des Auswahlorgans (12) entspricht, das Auswahlorgan (12) so ausgelegt ist, dass es das zweite Verriegelungselement (15) nicht betätigt, sodass dieses in der Verriegelungsstellung (PV) verbleibt.

4. Verteilereinheit nach einem der Ansprüche 2 bis 3, **dadurch gekennzeichnet, dass** in der Verschlussposition (PO) des Verschlusses (9), die einer zweiten Position des Auswahlorgans (12) entspricht, das Auswahlorgan (12) so ausgelegt ist, dass es das zweite Verriegelungselement (15) betätigt, sodass sich dieses in der Entriegelungsstellung (PDV) befindet.

5. Verteilereinheit nach Ansprüchen 3 und 4, **dadurch gekennzeichnet, dass** das Auswahlorgan (12) einen Hebel (16) umfasst, der beweglich am festen Teil (2) des Gehäuses (1) angebracht ist und zumindest wahlweise in die mindestens eine erste Position (P1) und der zweiten Position positionierbar ist, und mechanisch mit dem Verschluss (9) verbunden ist und vorzugsweise Greifmittel (26) umfasst, um den Hebel (16) manuell zu betätigen.

6. Verteilereinheit nach einem der Ansprüche 1 bis 5, **dadurch gekennzeichnet, dass** in der Schließstellung (POFF) die Tür (3) eine Öffnung (17) des festen Teils (2) abdeckt, wobei die Tür (3) durch das erste Verriegelungselement (14) in Bezug auf die genannte Öffnung (17) an- und abschraubbar angebracht ist in der Schließstellung (POFF) zwischen dem verriegelten Zustand (E1), in dem die Tür (3) angeschraubt ist, und dem entriegelten Zustand (E2), in dem die Tür (3) abgeschraubt ist.

7. Verteilereinheit nach Anspruch 6, **dadurch gekennzeichnet, dass** das zweite Verriegelungselement (15) eine Klinke (18) umfasst, die am festen Teil (2) des Gehäuses (1) zwischen der Verriegelungsstellung (PV) und der Entriegelungsstellung (PDV) schwenkbar angebracht ist und durch Rückstellmittel (19) vorgespannt wird, die am festen Teil (2) des Gehäuses (1) angebracht sind, sowie einen vom Außenumfang der Tür (3) abstehenden Vorsprung (20), wobei die Klinke (18) durch die Rückstellmittel (19) in der Verriegelungsstellung (PV) gegen den Vorsprung (20) gehalten wird, um die Drehung der Tür (3) zu verhindern und die Tür (3) im verriegelten Zustand (E1) zu halten, und wobei sich die Klinke (18) in der Entriegelungsstellung (PDV) in einem Abstand zum Vorsprung (20) entfernt ist, um die Drehung der Tür (3) zu ermöglichen und den Übergang der Tür (3) in den entriegelten Zustand (E2) zu gestatten.

8. Verteilereinheit nach den Ansprüchen 5, 6 und 7, **dadurch gekennzeichnet, dass** die Klinke (18) einen durch den Hebel (16) betätigbaren Abschnitt (21) aufweist und dass beim Überführen in die zweite Position der Hebel (16) so ausgebildet ist, dass er den betätigbaren Abschnitt (21) betätigt und eine Kraft ausübt, die der Rückstellkraft der Rückstellmittel (19) entgegenwirkt, und die Klinke (18) in die Entriegelungsstellung (PDV) schwenkt.

9. Säelement, umfassend eine Verteilereinheit und mindestens einen Trichter, der zur Aufnahme einer Vielzahl von körnigen Elementen ausgelegt ist, sowie eine Verteilereinheit, wobei der Trichter über Fördermittel (10, 11) mit der Verteilereinheit verbunden ist, **dadurch gekennzeichnet, dass** die Verteilereinheit nach einem der Ansprüche 1 bis 8 ausgebildet ist.

10. Sämaschine mit mindestens einem Rahmen, an dem mindestens ein Säelement angebracht ist, **dadurch gekennzeichnet, dass** das mindestens eine Säelement nach Anspruch 9 ausgebildet ist.

11. Verfahren zum Verriegeln/Entriegeln einer Verteilereinheit für eine Sämaschine, die zumindest im Vorratsbereich (7) eine Vielzahl von körnigen Elementen umfasst, **dadurch gekennzeichnet, dass** die Verteilereinheit nach einem der Ansprüche 1 bis 8 ausgebildet ist und dass das Verfahren umfasst:
- ein Verriegelungsschritt, bei dem sich in der Schließstellung (POFF) der Tür (3) der Verschluss (9) in der Zugangsposition (PA) befindet und die Tür (3) durch die Verriegelungsvorrichtung (13) im verriegelten Zustand (E1) gehalten wird, und
- ein Isolationsschritt, bei dem in der Schließstellung (POFF) der Tür (3) das Auswahlorgan (12) betätigt wird, um den Verschluss (9) von der Zugangsposition (PA) in die Verschlussposition (PO) zu bewegen, und die Betätigung der Verriegelungsvorrichtung (13) auslöst, um den Übergang der Tür (3) in den entriegelten Zustand (E2) zu ermöglichen oder den Übergang der Tür (3) in den entriegelten Zustand (E2) zu bewirken.

## Claims

1. Distribution assembly for a seed drill comprising at least:
- an airtight casing (1) comprising at least a fixed part (2) and a door (3) that can be moved between an open position (PON) and a closed position (POFF),
- a distribution element (4) for a plurality of granular elements, arranged for discrete and singular distribution of a plurality of granular elements,
the distribution element (4) being placed inside the casing (1) to separate the interior of the casing (1) into a first chamber (5) and a second chamber (6), which are different, the first chamber (5) being configured to receive all or part of the plurality of granular elements at least in a reserve zone (7), and the second chamber (6) being closed with the door (3) at least in its closed position (POFF),
the fixed part (2) of the casing (1) further comprises an inlet (8) for granular elements leading into the first chamber (5) associated with a shutter (9), said inlet (8) for granular elements being configured to be connected to conveying means (10, 11) connected to a hopper,
the shutter (9) being operable by a selection element (12) to at least selectively place the shutter (9) in a sealed position (PO) of the inlet (8) for granular elements in which the shutter (9) seals the inlet (8) for granular elements, or in an access position (PA) of the inlet (8) for granular elements in which the shutter (9) does not fully or partially seal the inlet (8) for granular elements,
in the closed position (POFF), the door (3) is at least locked in a locked state (E1) or unlocked in an unlocked state (E2) at least by a locking device (13), and
in the closed position (POFF) of the door (3), the locking device (13) and the selection element (12) are configured so that:
- as long as the shutter (9) is in the access position (PA) or is not in the sealed position (PO), the door (3) is held in the locked state (E1) by the locking device (13), and **characterised in that**:
- operation of the selection element (12) to pass the shutter (9) from the access position (PA) to the sealed position (PO) causes operation of the locking device (13) so as to allow the door (3) to pass to the unlocked state (E2) or cause the door (3) to pass to the unlocked state (E2).

2. Distribution assembly according to claim 1, **characterised in that** the locking device (13) comprises a first locking element (14) and a second locking element (15), in the closed position (POFF), the door (3) is at least locked in the locked state (E1) or unlocked in the unlocked state (E2) at least by the first locking element (14), the second locking element (15) can be moved between a locking position (PV) and an unlocking position (PDV), and in the closed position (POFF) of the door (3), the second locking element (15) and the selection element (12) are configured to cooperate with each other so that:
- the second locking element (15) remains in the locking position (PV) as long as the shutter (9) is in the access position (PA) or is not in the sealed position (PO) so as to prevent the unlocking of the first locking element (14) in order to hold the door (3) in the locked state (E1), and
- the operation of the selection element (12) to pass the shutter (9) to the sealed position (PO) causes the second locking element (15) to pass from the locking position (PV) to the unlocking position (PDV) so as to authorize the unlocking of the first locking element (14) and the passing of the door (3) from the locked state (E1) to the unlocked state (E2).

3. Distribution assembly according to claim 2, **characterised in that** in the at least one access position (PA) of the shutter (9) corresponding to at least a first position (P1) of the selection element (12), the selection element (12) is configured not to operate the second locking element (15) so that it remains in the locking position (PV).

4. Distribution assembly according to any one of claims 2 to 3, **characterised in that** in the sealed position (PO) of the shutter (9) corresponding to a second position of the selection element (12), the selection element (12) is configured to operate the second locking element (15) so that it is in the unlocking position (PDV).

5. Distribution assembly according to claims 3 and 4, **characterised in that** the selection element (12) comprises a lever (16) mounted so as to be mobile on the fixed part (2) of the casing (1), at least selectively positionable in the at least one first position (P1) and the second position and being mechanically connected to the shutter (9), and preferably comprising a gripping device (26) so as to manually operate the lever (16).

6. Distribution assembly according to any one of claims 1 to 5, **characterised in that** in the closed position (POFF), the door (3) covers an opening (17) of the fixed part (2), the door (3) being mounted so that it can be screwed/unscrewed relative to said opening (17) by the first locking element (14) in the closed position (POFF) between the locked state (E1) in which the door (3) is screwed on and the unlocked state (E2) in which the door (3) is unscrewed.

7. Distribution assembly according to claim 6, **characterised in that** the second locking element (15) comprises a latch (18) pivotally mounted on the fixed part (2) of the casing (1) between the locking position (PV) and the unlocking position (PDV) and reset by reset means (19) mounted on the fixed part (2) of the casing (1) and a protrusion (20) protruding from the outer periphery of the door (3), the latch (18) being held against the protrusion (20) by the reset means (19) in the locking position (PV) so as to prevent the rotation of the door (3) to keep the door (3) in the locked state (E1), and the latch (18) being at a distance from the protrusion (20) in the unlocking position (PDV) so as to allow the rotation of the door (3) to allow the door (3) to pass to the unlocked state (E2).

8. Distribution assembly according to claim 5, 6 and 7, **characterised in that** the latch (18) comprises a portion (21) operable by the lever (16) and when passing to the second position, the lever (16) is configured to operate the operable portion (21) and to exert a force against the return force of the reset means (19) and pivot the latch (18) into the unlocking position (PDV).

9. Seeder element comprising a distribution assembly and at least one hopper arranged to contain a plurality of granular elements and a distribution assembly, the hopper being connected by the conveying means (10, 11) to the distribution assembly, **characterised in that** the distribution assembly is in accordance with any one of claims 1 to 8.

10. Seed drill comprising at least one chassis on which at least one seeder element is mounted, **characterised in that** the at least one seeder element is in accordance with claim 9.

11. Locking/unlocking method for a distribution assembly for a seed drill comprising a plurality of granular elements at least in the reserve zone (7), **characterised in that** the distribution assembly is in accordance with any one of claims 1 to 8, and the method comprises:
- a locking stage, during which in the closed position (POFF) of the door (3), the shutter (9) is placed in the access position (PA) and the door (3) is held in the locked state (E1) by the locking device (13), and
- an isolation stage, during which in the closed position (POFF) of the door (3), the selection element (12) is operated to pass the shutter (9) from the access position (PA) to the sealed position (PO) and causes operation of the locking device (13) so as to allow the door (3) to pass to the unlocked state (E2) or to cause the door (3) to pass to the unlocked state (E2).
